# EUROPÄISCHE PATENTSCHRIFT

(11) **EP 1 101 914 B1**
(45) Veröffentlichungstag und Bekanntmachung des Hinweises auf die Patenterteilung: **25.01.2006**
(21) Anmeldenummer: 00124684.2
(22) Anmeldetag: 11.11.2000
(51) Int. Cl.: F01P 7/16, F01P 3/20

(54) **Flüssigkeitsgekühlte Brennkraftmaschine**
Liquid cooled internal combustion engine
Moteur à combustion interne refroidi par liquide

(30) Priorität: 17.11.1999 DE 19955302
(43) Veröffentlichungstag der Anmeldung: 23.05.2001
(73) Patentinhaber: DEUTZ Aktiengesellschaft, 51063 Köln (DE)
(72) Erfinder: Fuchs, Heinz Wolfgang, 42897 Remscheid (DE); Besler, Boris, 76131 Karlsruhe (DE); Herms, Ferdinand, Dr., 99734 Nordhausen (DE)

(56) Entgegenhaltungen:
- AT-U- 1 620
- DE-A- 19 810 726
- US-A- 3 872 835
- US-A- 4 513 695
- US-A- 4 520 767
- MUELLER U ET AL: "RECHNERSIMULATION VON KTZ-KUEHLKREISLAEUFEN" ATZ AUTOMOBILTECHNISCHE ZEITSCHRIFT, FRANCKH'SCHE VERLAGSHANDLUNG. STUTTGART, DE, Bd. 100, Nr. 7/8, 1. Juli 1998 (1998-07-01), Seiten 552-556, XP000769042 ISSN: 0001-2785

## Beschreibung

Die Erfindung betrifft eine flüssigkeitsgekühlte Brennkraftmaschine mit einem Kurbelgehäuse, jeweils zumindest einem Zylinderkopf, einem Abgassammelrohr, einem Abgasturbolader, einem Ladeluftwärmetauscher und einem Rohwasser-Wärmetauscher, die zusammen mit einer Kühlmittelpumpe zu einem Kühlmittelkreislauf zusammengeschaltet sind.

Eine derartige Brennkraftmaschine ist aus der DE 198 10 726 A1 bekannt. Das Kühlsystem dieser Brennkraftmaschine ist im wesentlichen so aufgebaut, daß nacheinander das Kurbelgehäuse der Brennkraftmaschine mit samt den Zylinderköpfen, die Abgasturbolader und dann die Abgassammelrohre von Kühlmittel durchströmt werden. Ausgangsseitig zu den Abgassammelrohren ist ein Rohwasser-Wärmetauscher und in Reihe zu diesen ein Ladeluftwärmetauscher in den Kühlmittelkreislauf eingeschaltet. Insgesamt ist der Kühlmittelkreislauf als Reihensystem ausgebildet, wobei das Hauptaugenmerk dieses Dokumentes auf der Ausbildung der Abgassammelrohre bezüglich der Kühlmittelführung und des Zusammenbaus gelegt ist.

In der US-A-3872735 ist der Kühlmittelkreislauf in einen Motorkühlkreis und einen Wärmetascherkreis, mit dem Ladeluftwärmetauscher (115) und dem Rohwasser-Wärmetauscher (113), in paralleler Anordnung aufgeteilt.

Der Erfindung liegt die Aufgabe zugrunde, eine flüssigkeitsgekühlte Brennkraftmaschine bereitzustellen, die bezüglich der Strömungsführung des Kühlmittels optimiert ist.

Diese Aufgabe wird erfindungsgemäß dadurch gelöst, daß der Kühlmittelkreislauf in Strömungsrichtung hinter der Kühlmittelpumpe in
a) einen Motorkühlkreis durch die Brennkraftmaschine mit dem Kurbelgehäuse und dem Zylinderkopf,
b) einen Abgaskreis mit dem Abgassammelrohr und dem Abgasturbolader und
c) einen Wärmetauscherkreis mit dem Ladeluftwärmetauscher und dem Rohwasser-Wärmetauscher

in paralleler Anordnung aufgeteilt ist, und diese Kreise vor der Kühlmittelpumpe wieder zusammengeführt sind. Durch diese Ausbildung wird insgesamt der Strömungswiderstand des Kühlmittelkreislaufs gegenüber andersartig geschalteten Kühlmittelkreisläufen gesenkt und somit unter anderem die Kavitationsgefahr herabgesetzt. Damit muß die Kühlmittelpumpe das Kühlmittel gegen einen geringeren Differenzdruck als bei bekannten Kühlmittelkreisläufen fördern, so daß insgesamt eine geringere Antriebsleistung erforderlich ist. Dabei wird erfindungsgemäß zunächst von einem gegebenen Motorkühlkreis durch die Brennkraftmaschine mit dem Kurbelgehäuse und dem Zylinderkopf ausgegangen und die durch diese Bauteile zu fördernde (maximale) Kühlmittelmenge als gegebene Größe angenommen. Ausgehend von dieser Größe ergibt sich durch den Strömungswiderstand der durchströmten Bauteile der Brennkraftmaschine (eingangsseitig zu ausgangsseitig) ein bestimmter Differenzdruck, der wiederum den Kühlmittelmassenstrom bestimmt. Die weiteren zu kühlenden Bauteile bzw. zu durchströmenden Wärmetauscher werden zu Gruppen zusammengefaßt und in weiterer Ausgestaltung der Erfindung so gestaltet, daß der Differenzdruck bei diesen Kreisen, nämlich den Abgaskreis und den Wärmetauscherkreis, einstellbar ist. Dies erfolgt über die Bauteile selbst oder ggf. durch die entsprechend nötigen Rohrverbindungen oder in diese oder die Bauteile eingesetzte ggf. einstellbare Drosseln. Durch diese Ausgestaltung ergibt sich der Differenzdruck über den Motorkühlkreis, den Abgaskreis und den Wärmetauscherkreis auf den jeweils gleichen Wert. Dadurch ist sichergestellt, daß die einzelnen Kreise mit der notwendigen Kühlmittelmenge durchströmt werden.

In Weiterbildung der Erfindung ist eingangsseitig in den Wärmetauscherkreis ein Kühlmittelthermostat eingeschaltet, das eine Kühlmittelströmung durch den Rohwasser-Wärmetauscher und einen diesen umgehenden Bypass steuert. Weiter ist die Kühlmittelströmung durch den Ladeluftwärmetauscher geführt. Durch diese Ausbildung wird entsprechend der Motoreintrittstemperatur von dem Kühlmittelthermostat ein mehr oder weniger großer Teilstrom durch den Rohwasser-Wärmetauscher geleitet. Während der Warmlaufphase des Motors wird der Rohwasser-Wärmetauscher nicht durchströmt, so daß auch der Ladeluftkühler nicht kühlt. Die dem Motor zugeführte Verbrennungsluft wird in diesem Betriebszustand im Ladeluftkühler durch das Kühlmittel aufgewärmt. Dadurch wird das in diesem Betriebszustand (Kaltstart/Niedriglast) übliche Blaurauchen des Motors deutlich reduziert oder ganz vermieden. Bei betriebswarmen Motor wird ein großer Teil des Kühlmittels des Wärmetauscherkreises durch den Rohwasser-Wärmetauscher geleitet und somit dem Ladeluftkühler gekühltes Kühlmittel zugeführt. Damit ist eine leistungsabhängige Kühlwirkung der Ladeluft erzielt. Dies gewährleistet eine niedrige Ladelufttemperatur bei Vollastbetrieb des Motors. Ein weiterer Vorteil dieser Ausbildung ist dadurch, daß das Kühlmittelthermostat nur von einem Teilstrom des gesamten Kühlmittelstromes durchströmt wird, ein kleineres Großserienthermostat verwendet werden kann.

In Weiterbildung der Erfindung ist parallel zu dem Ladeluftwärmetauscher ein Getriebeölwärmetauscher geschaltet und wiederum in Weiterbildung parallel zu dem Motorkühlkreis, dem Abgaskreis und dem Wärmetauscherkreis ein Heizungskreis geschaltet. Diese Ausgestaltungen werden je nach Erfordernis vorgenommen.

In Weiterbildung der Erfindung ist die Brennkraftmaschine in mehrzylindriger V-Bauart mit zwei Zylinderkopfreihen ausgebildet und bildet somit den Motorkühlkreislauf. Der Abgaskreis wird bei dieser Bauart in zwei gleiche parallel geschaltete Kreise aufgeteilt. Selbstverständlich ist die Lösung auch für einen Reihenmotor anwendbar.

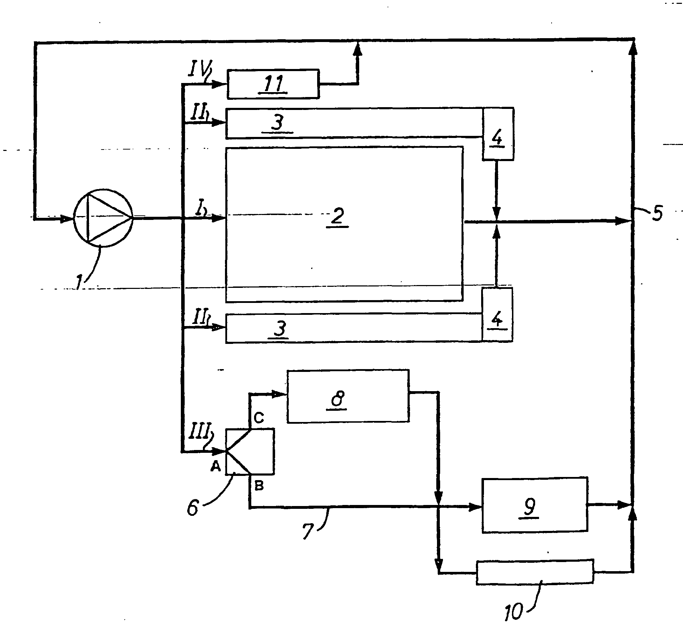

Weitere vorteilhafte Ausgestaltungen der Erfindung sind der Zeichnungsbeschreibung zu entnehmen, in der ein in der Figur dargestelltes Ausführungsbeispiel der Erfindung näher beschrieben ist.

In der einzigen Figur ist schematisch das erfindungsgemäße Kühlsystem dargestellt. Von einer Kühlmittelpumpe 1 wird das Kühlmittel, das bei einer flüssigkeitsgekühlten Brennkraftmaschine insbesondere Kühlwasser ist, in mehreren Teilströmen in verschiedene Kreise gefördeft. Dies sind zunächst einmal ein Motorkühlkreis I durch eine selbstzündende Brennkraftmaschine 2, die im Ausführungsbeispiel in mehrzylindriger V-Bauart mit zwei Zylinderkopfreihen auf einem gemeinsamen Kurbelgehäuse ausgebildet ist. Je ein zweiter Teilstrom des von der Kühlmittelpumpe 1 geförderten Kühlmittels wird in die Abgaskreise II mit jeweils einem Abgassammelrohr 3 und einen daran anschließenden Abgasturbolader 4 geleitet. Der Motorkühlkreis I und die beiden Abgaskreise II werden hinter der Brennkraftmaschine 2 zusammengeführt und in eine gemeinsame Kühlmittelsammelleitung 5 eingeleitet.

Ein dritter von der Kühlmittelpumpe 1 geförderter Teilstrom wird in einen Wärmetauscherkreis III eingeleitet. Eingangs des Wärmetauscherkreises III ist ein Kühlmittelthermostat 6 mit einem Eingang A und zwei Ausgängen B, C eingeschaltet. Der Ausgang B wird von dem Kühlmittelthermostat 6 bei kaltem Kühlmittel angesteuert und dieser ist über einem Bypass 7 parallel zu einem Rohwasser-Wärmetauscher 8 geschaltet, der mit dem Ausgang C des Kühlmittelthermostats 6 verschaltet ist. Im Betrieb der Brennkraftmaschine 2 wird das wärmer werdende Kühlmittel von den Kühlmittelthermostaten 6 kontinuierlich übergehend von dem Ausgang B in den Ausgang C geleitet, so daß folglich in Abhängigkeit der Betriebstemperatur der Brennkraftmaschine 2 eine zunehmende Kühlung des Kühlmittels erfolgt.

Hinter dem Rohwasser-Wärmetauscher 8 wird der diesen durchströmende Kühlmittelstrom mit dem des Bypasses 7 zusammengeführt und in einen Ladeiuftwärmetauscher 9 und einen parallel dazu geschalteten Getriebeölwärmetauscher 10 geleitet. Hinter dem Ladeluftwärmetauscher 9 und dem Getriebeölwärmetauscher 10 wird der Wärmetauscherkreis III wieder zusammengeführt und in die Kühlmittelsammelleitung 5 eingeleitet. Bei Bedarf ist parallel zu diesen drei Teilströmen ein Heizungskreis IV vorgesehen, der einen Teilstrom des Kühlmittels durch einen Heizungswärmelauscher 11 leitet. Hinter dem Heizungswärmetauscher 11 wird dieser Teilstrom ebenfalls in die Kühlmittelsammelleitung 5 eingeleitet. Die Kühlmittelsammelleitung 5 ist schließlich wieder mit dem Eingang der Kühlmittelpumpe 1 verbunden.

Entlang der Kühlmittelführung des Motorkühlkreises I durch die Brennkraftmaschine 2 und die zwei Zylinderkopfreihen stellt sich durch den Strömungswiderstand der mit einer vorgegebenen Kühlmittelmenge zu durchströmenden Bauteile ein Differenzdruck ein, der beispielsweise 2 bar beträgt. Dieser Differenzdruck bestimmt den Kühlmittelmassenstrom und ist bei einer vorhandenen Brennkraftmaschine als gegeben anzusehen und nicht veränderbar, insbesondere nicht verringerbar. Um eine kontinuierliche Kühlmittelströmung durch die Abgaskreise II, den Wärmetauscherkreis III und ggf. den Heizungskreis IV zu gewährleisten, werden die Kühlmittelmassenströme auf die vorgegebene Druckdifferenz von jeweils 2 bar eingestellt. Dies erfolgt durch Auslegung der Bauteile selbst, durch entsprechende Rohrverbindungen oder in die Bauteile oder die Rohrverbindungen eingesetzte und ggf. einstellbare Drosseln. In dem vorliegenden Ausführungsbeispiel betragen dabei ausgehend von einer erforderlichen Kühlmittelströmungsmenge durch den Motorkühlkreis I von ca. 475 l/min., die weiteren Kühlmittelströmungsmengen durch die beiden Abgaskreise II ca. 100 l/min. und den Wärmetauscherkreis III ca. 130 l/min.. Hinzu kommt dann ggf. noch die Strömungsmenge durch den Heizungskreis. Ohne den Heizungskreis IV ergibt sich somit eine Gesamtmenge von ca. 705 l/min..

## Patentansprüche

1. Flüssigkeitsgekühlte Brennkraftmaschine (2) mit einem Kurbelgehäuse, zumindest einem Zylinderkopf, einem Abgassammelrohr (3), einem Abgasturbolader (4), einem Ladeluftwärmetauscher (9) und einem Rohwasser-Wärmetauscher (8), die zusammen mit einer Kühlmittelpumpe (1) zu einem Kühlmittelkreislauf zusammengeschaltet sind, wobei der Kühlmittelkreislauf in Strömungsrichtung hinter der Kühlmittelpumpe (1) in
a) einen Motorkühlkreis (I) durch die Brennkraftmaschine (2) mit dem Kurbelgehäuse und dem Zylinderkopf,
b) einen Wärmetauscherkreis (III) mit dem Ladeluftwärmetauscher (9) und dem Rohwasser-Wärmetauscher (8)
in paralleler Anordnung aufgeteilt ist, **dadurch gekennzeichnet, daß** parallel zum Motorkühlkreis und dem Wärmetauscherkreis
c) ein Abgaskreis (II) mit dem Abgassammelrohr (3) und dem Abgasturbolader (4) geschaltet ist, und diese Kreise (I,II,III) vor der Kühlmittelpumpe (1) wieder zusammengeführt sind.

2. Flüssigkeitsgekühlte Brennkraftmaschine nach Anspruch 1, **dadurch gekennzeichnet, daß** der Differenzdruck bzw. der Kühlmittelmassenstrom über den Abgaskreis (II) und den Wärmetauscherkreis (III) einstellbar ist.

3. Flüssigkeitsgekühlte Brennkraftmaschine nach Anspruch 2, **dadurch gekennzeichnet, daß** der Differenzdruck über den Motorkühlkreis (I), den Abgaskreis (II) und den Wärmetauscherkreis (III) gleich ist.

4. Flüssigkeitsgekühlte Brennkraftmaschine nach einem der vorherigen Ansprüche,
**dadurch gekennzeichnet, daß** eingangsseitig in den Wärmetauscherkreis (III) ein Kühlmittelthermostat (6) eingeschaltet ist, das eine Kühlmittelströmung durch den Rohwasser-Wärmetauscher (8) und einen diesen umgehenden Bypass (7) steuert, und daß die Kühlmittelströmung weiter durch den Ladeluftwärmetauscher (9) geführt ist.

5. Flüssigkeitsgekühlte Brennkraftmaschine nach einem der vorherigen Ansprüche,
**dadurch gekennzeichnet, daß** parallel zu dem Ladeluftwärmetauscher (9) ein Getriebeölwärmetauscher (10) geschaltet ist.

6. Flüssigkeitsgekühlte Brennkraftmaschine nach einem der vorherigen Ansprüche,
**dadurch gekennzeichnet, daß** parallel zu dem Motorkühlkreis (I), dem Abgaskreis (II) und dem Wärmetauscherkreis (III) ein Heizungskreis (IV) geschaltet ist.

7. Flüssigkeitsgekühlte Brennkraftmaschine nach einem der vorherigen Ansprüche,
**dadurch gekennzeichnet, daß** die Brennkraftmaschine (1) in mehrzylindriger V-Bauart mit zwei Zylinderkopfreihen ausgebildet ist.

## Claims

1. Liquid-cooled internal combustion engine (2) having a crankcase, at least one cylinder head, an exhaust-gas manifold (3), an exhaust-gas turbocharger (4), a charge-air heat exchanger (9) and a raw-water heat exchanger (8), which are connected together, together with a coolant pump (1), to form a coolant circuit, the coolant circuit being divided, in a parallel arrangement in the direction of flow behind the coolant pump (1), into
a) an engine cooling circuit (I) through the internal combustion engine (2) with the crankcase and the cylinder head,
b) a heat-exchanger circuit (III) with the charge-air heat exchanger (9) and the raw-water heat exchanger (8),
**characterized in that**
c) an exhaust-gas circuit (II) with the exhaust-gas manifold (3) and the exhaust-gas turbocharger (4) is connected
in parallel to the engine cooling circuit and the heat-exchanger circuit, and the said circuits (I, II, III) are combined again before the coolant pump (1).

2. Liquid-cooled internal combustion engine according to Claim 1, **characterized in that** the differential pressure or the coolant mass flow across the exhaust-gas circuit (II) and the heat-exchanger circuit (III) can be set.

3. Liquid-cooled internal combustion engine according to Claim 2, **characterized in that** the differential pressure is equal across the engine cooling circuit (I), the exhaust-gas circuit (II) and the heat-exchanger circuit (III).

4. Liquid-cooled internal combustion engine according to one of the preceding claims, **characterized in that**, on the input side, a coolant thermostat (6) is connected into the heat-exchanger circuit (III), which coolant thermostat (6) controls a coolant flow through the raw-water heat exchanger (8) and a bypass (7) which bypasses the latter, and **in that** the coolant flow is guided further through the charge-air heat exchanger (9).

5. Liquid-cooled internal combustion engine according to one of the preceding claims, **characterized in that** a transmission-oil heat exchanger (10) is connected in parallel to the charge-air heat exchanger (9).

6. Liquid-cooled internal combustion engine according to one of the preceding claims, **characterized in that** a heating circuit (IV) is connected in parallel to the engine cooling circuit (I), the exhaust-gas circuit (II) and the heat-exchanger circuit (III).

7. Liquid-cooled internal combustion engine according to one of the preceding claims, **characterized in that** the internal combustion engine (1) is configured with two rows of cylinder heads in the multi-cylinder V-type of construction.

## Revendications

1. Moteur à combustion interne (2) refroidi par un liquide, comprenant un carter moteur, au moins une culasse, un collecteur de gaz d'échappement (3), une turbosoufflante à gaz d'échappement (4), un échangeur de chaleur à air de charge (9) et un échangeur de chaleur à eau brute (8), qui sont montés ensemble conjointement avec une pompe de réfrigérant (1) pour former un circuit de réfrigérant, le circuit de réfrigérant étant divisé en parallèle dans la direction d'écoulement derrière la pompe de réfrigérant (1) en
a) un circuit de refroidissement du moteur (I) à travers le moteur à combustion interne (2) avec le carter moteur et la culasse,
b) un circuit échangeur de chaleur (III) avec l'échangeur de chaleur à air de charge (9) et l'échangeur de chaleur à eau brute (8),
**caractérisé en ce que**
parallèlement au circuit de refroidissement du moteur et au circuit échangeur de chaleur,
c) un circuit de gaz d'échappement (II) est monté avec le collecteur de gaz d'échappement (3) et la turbosoufflante à gaz d'échappement (4),
et ces circuits (I, II, III) sont à nouveaux réunis avant la pompe à réfrigérant (1).

2. Moteur à combustion interne refroidi par un liquide selon la revendication 1,
**caractérisé en ce que** la pression différentielle ou le débit massique de réfrigérant peut être ajusté(e) par le biais du circuit de gaz d'échappement (II) et du circuit échangeur de chaleur (III).

3. Moteur à combustion interne refroidi par un liquide selon la revendication 2,
**caractérisé en ce que** la pression différentielle est la même sur le circuit de refroidissement du moteur (I), le circuit de gaz d'échappement (II) et le circuit échangeur de chaleur (III).

4. Moteur à combustion interne refroidi par un liquide selon l'une quelconque des revendications précédentes,
**caractérisé en ce que** du côté de l'entrée dans le circuit échangeur de chaleur (III), on branche un thermostat pour le réfrigérant (6), lequel commande un écoulement de réfrigérant à travers l'échangeur de chaleur à eau brute (8) et une dérivation (7) le contournant, et **en ce que** l'écoulement de réfrigérant est encore guidé à travers l'échangeur de chaleur à air de charge (9).

5. Moteur à combustion interne refroidi par un liquide selon l'une quelconque des revendications précédentes,
**caractérisé en ce que** l'on branche parallèlement à l'échangeur de chaleur à air de charge (9) un échangeur de chaleur à huile de transmission (10).

6. Moteur à combustion interne refroidi par un liquide selon l'une quelconque des revendications précédentes,
**caractérisé en ce que** l'on branche parallèlement au circuit de refroidissement du moteur (I), au circuit de gaz d'échappement (II) et au circuit échangeur de chaleur (III), un circuit de chauffage (IV).

7. Moteur à combustion interne refroidi par un liquide selon l'une quelconque des revendications précédentes,
**caractérisé en ce que** le moteur à combustion interne (1) est réalisé avec plusieurs cylindres en V avec deux rangées de culasses.
